# FASCICULE DE BREVET EUROPEEN

(11) **EP 4 031 909 B1**
(45) Date de publication et mention de la délivrance du brevet: **20.12.2023**
(21) Numéro de dépôt: 20785808.5
(22) Date de dépôt: 15.09.2020
(51) Int. Cl.: G01S 17/95, G01S 17/58, G01S 7/493, G01S 17/88, G01S 7/484, G01S 7/4911, G01S 7/487

(54) **SYSTEME LIDAR POUR MESURES ANEMOMETRIQUES**
LIDARSYSTEM FÜR ANEMOMETRISCHE MESSUNGEN
LIDAR SYSTEM FOR ANEMOMETRIC MEASUREMENTS

(30) Priorité: 20.09.2019 FR 1910390
(43) Date de publication de la demande: 27.07.2022
(73) Titulaire: Office National d'Etudes et de Recherches Aérospatiales, 91120 Palaiseau (FR)
(72) Inventeur: MICHEL, David Tomline, 91400 ORSAY (FR); AUGERE, Béatrice, 91120 Palaiseau (FR); VALLA, Matthieu, 91360 EPINAY SUR ORGE (FR)
(74) Mandataire: Plasseraud IP
(86) Numéro de dépôt international: PCT/FR2020/051591
(87) Numéro de publication internationale: WO 2021/053290

(56) Documents cités:
- EP-A2- 2 282 216
- CN-B- 103 513 257
- FR-A1- 2 952 722
- ANGELOU NIKOLAS ET AL: "Direct measurement of the spectral transfer function of a laser based anemometer", REVIEW OF SCIENTIFIC INSTRUMENTS, AIP, MELVILLE, NY, US, vol. 83, no. 3, 1 mars 2012 (2012-03-01), pages 33111-33111, XP012162120, ISSN: 0034-6748, DOI: 10.1063/1.3697728 [extrait le 2012-03-27]

## Description

### Domaine technique

La présente description concerne un système LIDAR qui est adapté pour effectuer des mesures anémométriques, ainsi qu'un procédé de mesure qui utilise un tel système.

### Technique antérieure

Les systèmes LIDAR, pour «Light Détection and Ranging» en anglais, sont très connus et utilisés pour de nombreuses applications, notamment pour effectuer des mesures anémométriques. Pour une mesure de vitesse anémométrique, le faisceau laser est rétrodiffusé par des particules qui sont en suspension dans l'air, telles que des aérosols ou des grains solides, et qui sont entrainées par les courants aériens. Alors, la composante de la vitesse du vent qui est parallèle au faisceau laser est déduite du décalage fréquentiel dû à l'effet Doppler. Toutefois, plusieurs raisons limitent la performance des systèmes LIDAR existants qui sont utilisés pour des mesures de vitesse anémométrique. Parmi ces raisons, l'une des plus contraignantes est la faible valeur du rapport CNR spectral, pour «carrier-to-noise spectral ratio» en anglais, qui est noté CNR_sp, et qui est le rapport du maximum d'amplitude du spectre du signal rétrodiffusé par le bruit spectral, ce dernier étant évalué comme l'écart-type de l'amplitude spectrale en dehors du signal rétrodiffusé. Ce rapport CNR_sp est de préférence supérieur à 3, pour permettre une détermination fiable du décalage Doppler, et par suite de la vitesse anémométrique. Cette contrainte sur la valeur du rapport CNR_sp est particulièrement sévère pour des mesures qui sont effectuées en altitude dans l'atmosphère, notamment pour des mesures réalisées à partir d'un avion, et tout particulièrement à plus de 2 ou 3 km (kilomètre) d'altitude, à cause des faibles concentrations de particules rétrodiffusantes qui existent à de tels niveaux d'altitude.

Un premier type de systèmes LIDAR qui sont utilisés pour des mesures anémométriques est à base de sources laser continues, telles que des diodes laser. Dans ce cas, la portion d'atmosphère qui est concernée par la mesure est sélectionnée en conférant au faisceau laser qui est émis une forme de faisceau convergent. Le faisceau laser converge donc jusqu'à une zone de focalisation, puis diverge, en pouvant être décrit par une structure de faisceau gaussien. La zone de focalisation possède une longueur mesurée parallèlement à la direction centrale de propagation du faisceau laser, qui est égale au double de la longueur de Rayleigh, c'est-à-dire égale à 2·λ/(π·θ²), et un rayon minimal, appelé «waist» en anglais, qui est égal à λ/(π·θ), où λ est la longueur d'onde du faisceau laser et θ est le demi-angle de divergence, exprimé en radians, du faisceau laser au-delà de la zone de focalisation, du côté opposé à la source d'émission laser. Typiquement, le demi-angle de divergence θ est la demi-ouverture angulaire du faisceau laser telle qu'existant à 2 km au-delà de la zone de focalisation. Dans ces conditions, la partie du faisceau laser qui est rétrodiffusée provient essentiellement de la zone de focalisation, si bien que le résultat de la mesure LIDAR concerne la vitesse du vent telle qu'elle existe dans la zone de focalisation. Mais le principe de sélection de la zone de focalisation par la divergence du faisceau laser établit une corrélation entre la taille de cette zone de focalisation et la distance d'éloignement qui existe entre cette zone de focalisation et le système LIDAR. Dans la pratique, lorsque la pupille de sortie du système LIDAR possède un rayon de 0,10 m (mètre), cette distance d'éloignement de la zone de focalisation par rapport au système LIDAR peut être de plusieurs centaines de mètres, par exemple 300 m pour une longueur de la zone de focalisation qui est alors de 50 m environ.

En outre, et aussi de façon connue, le traitement du signal de détection pour un tel système LIDAR à émission continue procède par découpage du signal de détection selon des fenêtres temporelles successives et séparées, par exemple avec une durée de chaque fenêtre temporelle qui peut être égale à 1 µs (microseconde). Pour améliorer la valeur du rapport CNR_sp qui est obtenu pour chaque fenêtre de découpage temporel, des valeurs d'amplitude spectrale qui résultent séparément de N fenêtres temporelles successives, N étant un nombre entier positif, sont combinées en une valeur moyenne qui constitue le résultat de mesure. Mais étant donné que les valeurs de détection qui sont ainsi additionnées pour obtenir le résultat de mesure sont issues de signaux de détection incohérents entre eux, le rapport CNR_sp qui est relatif au résultat de mesure est augmenté d'un facteur N^{1/2} par rapport à la valeur du rapport CNR_sp qui est relative à chaque valeur de détection. Par exemple, pour 100 valeurs de détection qui sont ainsi combinées, le gain sur le rapport CNR_sp est d'un facteur 10. Cependant, un tel gain peut être insuffisant pour des conditions de mesure anémométrique où le rapport CNR_sp d'une valeur de détection est particulièrement bas, par exemple à plus de 2 ou 3 km d'altitude où le coefficient de rétrodiffusion du faisceau laser par les particules qui sont en suspension dans l'air peut être très faible. Alternativement, utiliser une valeur très grande pour le nombre N impose une durée effective de mesure qui est longue, et qui peut être incompatible avec certaines applications, telles que des mesures anémométriques à effectuer en temps réel à partir d'un avion, par exemple.

Dans des systèmes LIDAR d'un second type, la source d'émission laser est une source impulsionnelle, et le rayonnement qui est émis par impulsions dans l'atmosphère possède une structure de faisceau collimaté. La durée de chaque impulsion d'émission laser peut être par exemple entre 0,15 µs et 1 µs. Alors, la portion d'atmosphère qui est concernée par chaque mesure est un cylindre dont le diamètre est celui du faisceau laser collimaté, et dont la longueur selon la direction de propagation des impulsions laser correspond à la durée d'une fenêtre temporelle de détection qui est associée à chaque impulsion de rayonnement rétrodiffusé, multipliée par C/2, où C est la vitesse de propagation du rayonnement dans l'atmosphère. Simultanément, la distance entre la portion d'atmosphère qui est concernée par la mesure et le système LIDAR est déterminée par un retard qui est contrôlé, entre l'émission d'une impulsion et la fenêtre temporelle de détection correspondante. Si la durée de chaque impulsion laser est courte, par exemple de l'ordre de 0,15 µs, la résolution spatiale est fine, mais la valeur du rapport CNR_sp est alors faible et provoque, par élargissement spectral, une incertitude sur le résultat de mesure de la composante de la vitesse anémométrique qui est parallèle à la direction de propagation des impulsions laser. D'autre part, si chaque impulsion du rayonnement laser est trop longue, par exemple de l'ordre de 1 µs, le rapport CNR_sp est augmenté, l'élargissement spectral est réduit, mais la résolution spatiale est dégradée. Il en résulte donc un compromis contraignant entre résolution spatiale, valeur du rapport CNR_sp et précision sur la valeur de vitesse anémométrique qui est mesurée.

Pour les systèmes LIDAR du second type, le rapport CNR_sp peut aussi être augmenté en moyennant N mesures élémentaires séparées, chaque mesure élémentaire résultant d'une impulsion laser distincte et de la détection du rayonnement rétrodiffusé qui correspond cette impulsion laser. Mais les mesures élémentaires qui sont combinées ainsi étant issues de signaux indépendants entre eux, le rapport CNR_sp du résultat de moyenne n'est de nouveau augmenté que d'un facteur N^{1/2}.

D'autres limitations de la performance des systèmes LIDAR pour des mesures anémométriques peuvent être, selon la nature du système LIDAR qui est utilisé : la durée d'une mesure, le poids et l'encombrement du système, la sensibilité pour des faibles valeurs de vitesse anémométrique, etc.

En particulier, le document EP 2 282 216 A2 décrit une utilisation possible d'un système LIDAR du premier type présenté ci-dessus.

Le document FR 2 952 722 A1 décrit un perfectionnement pour un système LIDAR encore du premier type, qui consiste à ajouter une modulation d'une caractéristique de phase du faisceau laser émis, cette modulation consistant en des décalages de la caractéristique de phase qui sont variables entre des créneaux temporels successifs.

### Problème technique

A partir de cette situation, un but de la présente invention est de permettre d'effectuer des mesures anémométriques qui présentent des valeurs de rapport CNR_sp supérieures à celles des systèmes antérieurs, tout en conservant une bonne résolution spatiale.

Un but annexe de l'invention est de permettre de telles mesures qui présentent en outre une bonne précision sur les valeurs de vitesse anémométrique qui constituent les résultats de mesures.

Un autre but annexe de l'invention est de permettre d'effectuer des mesures avec une durée de mesure qui ne soit pas trop longue.

Enfin, d'autres buts annexes de l'invention sont de nécessiter un système LIDAR qui soit peu lourd et peu encombrant, de préférence peu onéreux, et qui présente une bonne sensibilité pour des faibles valeurs de vitesse anémométrique.

### Résumé de l'invention

Pour atteindre l'un au moins de ces buts ou un autre, un premier aspect de l'invention propose un nouveau système LIDAR qui est adapté pour effectuer des mesures anémométriques, et qui comprend :
- une source d'émission laser, capable de produire un faisceau laser vers une portion d'atmosphère extérieure au système LIDAR, de sorte que le faisceau laser soit convergent au niveau d'une pupille de sortie de la source d'émission laser, et présente une section transversale de faisceau qui est minimale à mi-longueur d'une zone de focalisation du faisceau laser, cette zone de focalisation ayant une longueur égale à 2·λ/(π·θ²), mesurée parallèlement à une direction centrale de propagation du faisceau laser, où λ est une longueur d'onde du faisceau laser et θ est un demi-angle de divergence du faisceau laser au-delà de la zone de focalisation d'un côté opposé à la source d'émission laser, exprimé en radians, λ/(π·θ²) étant appelée longueur de Rayleigh ;
- un ensemble de détection hétérodyne, agencé pour recevoir une partie du faisceau laser qui est rétrodiffusée par des particules contenues dans la zone de focalisation ; et
- un module de calcul Doppler, adapté pour déduire une valeur de vitesse des particules à partir d'un signal de battement qui est produit par l'ensemble de détection hétérodyne.

Autrement dit, le système LIDAR de l'invention est similaire au type à base d'une source laser à émission continue, tel que présenté plus haut. En particulier, la portion d'atmosphère qui est l'objet de la mesure anémométrique est la zone de focalisation telle que déterminée par la structure convergente du faisceau laser au niveau de la pupille de sortie de la source d'émission laser.

Le demi-angle θ de divergence du faisceau laser est l'angle sous lequel apparaît un point où l'intensité du faisceau est égale à 1/e² fois une valeur maximale d'intensité du faisceau, à l'intérieur d'un plan de caractérisation qui est perpendiculaire à la direction centrale de propagation du faisceau laser, et qui est situé à 2 km en aval d'un plan de striction où le faisceau laser présente une taille de section transversale qui est minimale, par rapport au sens de propagation du faisceau laser. En outre, le demi-angle θ est mesuré par rapport à la direction centrale de propagation, en ayant pour sommet le point d'intersection entre cette direction centrale de propagation et le plan de striction.

Les particules qui rétrodiffusent une partie du faisceau laser peuvent être quelconques, notamment des particules solides ou d'aérosol qui sont en suspension dans l'air, telles que des poussières, des micro-grains, des microcristaux de glace, des gouttelettes d'eau, etc.

Selon l'invention, le système LIDAR comprend en outre :
- un dispositif de contrôle temporel du faisceau laser, qui est adapté pour mettre ce faisceau laser sous forme d'impulsions laser successives, et qui est associé à la source d'émission laser de sorte que les impulsions laser traversent la zone de focalisation, avec une partie de chaque impulsion laser qui est rétrodiffusée par les particules. Ce dispositif de contrôle temporel est adapté en outre pour que chaque impulsion laser ait une durée individuelle qui est supérieure ou égale au double de la longueur de Rayleigh divisée par la vitesse de propagation des impulsions laser dans l'atmosphère, et inférieure à 20 µs, de préférence inférieure à 10 µs.

La durée individuelle d'une impulsion laser est la durée entre un premier instant où la puissance du faisceau laser croît en étant égale à la moitié d'une valeur maximale de puissance qui est atteinte pendant l'impulsion laser, et un second instant où la puissance du faisceau laser décroît en étant de nouveau égale à la moitié de la valeur maximale de puissance. Autrement dit, la durée individuelle d'une impulsion laser est définie comme sa largeur à mi-hauteur, en termes de durée et de puissance instantanée de rayonnement.

Grâce à l'utilisation du dispositif de contrôle temporel du faisceau laser, la durée de chaque impulsion de faisceau laser est ajustée pour que l'ensemble de détection hétérodyne reçoive du rayonnement qui est rétrodiffusé à partir de toute la zone de focalisation, à la façon d'un système LIDAR à émission continue. De cette façon, une intensité du signal de détection qui est affecté par l'effet Doppler, peut être maximisée.

En outre, le dispositif de contrôle temporel du faisceau laser, qui détermine les impulsions laser successives, permet de supprimer des contributions à la rétrodiffusion qui seraient produites avec des décalages temporels supérieurs à la durée de cohérence atmosphérique. Une telle durée de cohérence atmosphérique est provoquée par des déplacements locaux de l'atmosphère, en particulier.

En outre encore, notamment grâce à la valeur maximale de 20 µs, le dispositif de contrôle temporel du faisceau laser qui détermine les impulsions laser successives permet de supprimer des contributions à la rétrodiffusion qui seraient produites par des nuages situés en arrière-plan de la zone de focalisation, dans lesquels les particules rétrodiffusantes seraient en concentration très supérieure par rapport à la zone de focalisation. Ainsi, l'utilisation d'un faisceau laser impulsionnel permet d'assurer que le signal de détection soit bien issu de la zone de focalisation.

Enfin, la mise en oeuvre d'impulsions laser permet d'accéder à des valeurs de puissance de rayonnement, à l'intérieur de chaque impulsion, qui sont supérieures à des valeurs de puissance disponibles pour du rayonnement laser continu. Alors, le rapport CNR_sp, qui est proportionnel à l'intensité du rayonnement qui est rétrodiffusé et collecté par l'ensemble de détection hétérodyne, peut posséder une valeur supérieure. Pour cette raison, le système LIDAR de l'invention peut être mis en oeuvre dans des conditions où le coefficient de rétrodiffusion de l'atmosphère est faible ou très faible, notamment à partir d'un aéronef à 2 km d'altitude ou plus.

Pour cette même raison, un système LIDAR conforme à l'invention rend optionnel d'effectuer une moyenne de plusieurs résultats de mesure qui sont obtenus à partir d'impulsions laser séparées, ou permet qu'une telle opération de moyenne soit effectuée sur un faible nombre d'impulsions, de sorte que la durée nécessaire pour obtenir un résultat final de mesure peut être particulièrement courte.

Par ailleurs, le système LIDAR de l'invention n'impose pas de compromis entre résolution spatiale et précision des valeurs mesurées de vitesse anémométrique, par opposition aux systèmes LIDAR impulsionnels où la sélectivité spatiale résulte de la durée des impulsions.

De préférence, le dispositif de contrôle temporel du faisceau laser peut être adapté pour que chaque impulsion laser ait une durée individuelle qui soit égale au triple de la longueur de Rayleigh divisée par la vitesse de propagation des impulsions laser dans l'atmosphère.

En particulier, le dispositif de contrôle temporel du faisceau laser peut être adapté pour que la durée individuelle de chaque impulsion laser soit comprise entre 0,2 µs et 5 µs, de préférence entre 0,5 µs et 1,2 µs. Une telle durée d'impulsion laser est en effet adaptée lorsque la durée de cohérence atmosphérique est sensiblement égale à 1 µs.

Dans des modes particuliers de réalisation de l'invention, l'une au moins des caractéristiques additionnelles suivantes peut être reproduite optionnellement, seule ou en combinaison de plusieurs d'entre elles :
- le dispositif de contrôle temporel du faisceau laser peut comprendre au moins un composant sélectionné parmi un modulateur acousto-optique, un modulateur électro-optique, un amplificateur optique à semi-conducteur, un système d'allumage et d'extinction de la source d'émission laser, et un système de sélection d'un mode propre d'une cavité d'amplification laser. Toutefois, tout autre dispositif de contrôle temporel du faisceau laser peut être utilisé alternativement, tel que par exemple un système à commutateur optique, électronique ou électro-optique ;
- le dispositif de contrôle temporel du faisceau laser peut être intégré à la source d'émission laser, ou être agencé pour agir sur une entrée de commande de la source d'émission laser, ou encore être disposé en aval de la source d'émission laser par rapport à un sens de propagation du rayonnement, afin de modifier au moins une caractéristique de répartition temporelle du faisceau laser après que ce faisceau laser a été produit par la source d'émission laser ;
- la source d'émission laser peut être d'un type à émission continue et le dispositif de contrôle temporel du faisceau laser peut alors être adapté pour découper ce faisceau laser en impulsions laser successives. Alternativement, la source d'émission laser peut être d'un type à émission sous forme d'impulsions laser successives, et le dispositif de contrôle temporel du faisceau laser peut alors être adapté pour modifier, notamment augmenter, une durée de chaque impulsion laser. D'autres combinaisons de type de source d'émission laser et de type de dispositif de contrôle temporel du faisceau laser qui est émis par la source considérée peuvent encore être mises en oeuvre alternativement ;
- le système peut être adapté en outre pour appliquer un décalage fréquentiel entre chaque impulsion laser et un signal laser de référence qui est utilisé par l'ensemble de détection hétérodyne, de sorte qu'une vitesse nulle des particules qui sont contenues dans la zone de focalisation, par rapport au système LIDAR, corresponde à une fréquence qui est non-nulle pour le signal de battement produit par l'ensemble de détection hétérodyne. Un tel perfectionnement est particulièrement avantageux pour mesurer des vitesses anémométriques qui sont faibles, par exemple pour applications au sol telles que l'optimisation du fonctionnement d'éoliennes, ou pour des mesures effectuées à partir d'aéronefs qui peuvent rester en vol stationnaire ou quasi-stationnaire ;
- la source d'émission laser peut être du type à fibre optique, et être adaptée de sorte que chaque impulsion laser ait une puissance moyenne comprise entre 100 W (watt) et 5·10⁵ W, de préférence entre 200 W et 2000 W. De telles sources d'émission laser à fibre optique sont peu lourdes et peu encombrantes, si bien que le système LIDAR peut facilement être embarqué à bord d'un aéronef ;
- la longueur d'onde de la source d'émission laser peut être comprise entre 1,5 µm et 1,7 µm, à l'intérieur d'un domaine spectral de transparence de l'atmosphère, et éventuellement aussi à l'intérieur d'un domaine spectral de transparence de fibres optiques qui sont utilisées dans le système LIDAR. Une telle longueur d'onde présente l'avantage de limiter des risques oculaires ;
- le dispositif de contrôle temporel du faisceau laser peut être adapté pour que deux impulsions laser successives soient séparées par une durée qui est comprise entre 3 µs et 500 µs, de préférence inférieure à 100 µs. Il est ainsi possible d'obtenir des valeurs de puissance d'impulsion laser qui sont supérieures ;
- le système LIDAR peut être agencé pour émettre simultanément des impulsions laser selon plusieurs directions de mesure qui sont réparties autour d'une direction centrale, avec un angle de chaque direction de mesure par rapport à la direction centrale qui est inférieur à 30°, de façon à obtenir des valeurs respectives de trois coordonnées de la vitesse des particules. Il est ainsi possible de caractériser les composantes de la vitesse du vent simultanément selon trois axes orthogonaux de coordonnées d'espace, c'est-à-dire en trois dimensions ; et
- la source d'émission laser peut comprendre un dispositif variable de focalisation, adapté pour varier une distance de mesure qui existe entre la pupille de sortie de cette source d'émission laser et un point central de la zone de focalisation, par exemple entre 200 m et 1000 m.

Un second aspect de l'invention propose un aéronef qui est équipé d'un système LIDAR conforme au premier aspect de l'invention, ce système LIDAR étant embarqué à bord de l'aéronef pour effectuer des mesures anémométriques pendant un vol de cet aéronef. L'aéronef peut être en particulier un avion, un hélicoptère, un drone, quel que soit le type de drone, notamment à voilure portante fixe ou du type multicoptère.

Enfin, un troisième aspect de l'invention concerne un procédé de mesure anémométrique, qui comprend les étapes suivantes :
- disposer un système LIDAR qui est conforme au premier aspect de l'invention, de sorte que la zone de focalisation soit contenue dans une portion d'atmosphère où une vitesse anémométrique est à mesurer ;
- adopter une durée individuelle d'impulsion laser qui est supérieure ou égale au double de la longueur de Rayleigh divisée par la vitesse de propagation des impulsions laser dans l'atmosphère, et inférieure à 20 µs, de préférence inférieure à 10 µs ; et
- activer le système LIDAR pour obtenir une valeur de vitesse des particules qui sont contenues dans la zone de focalisation.

De préférence, le dispositif de contrôle temporel du faisceau laser peut être ajusté pour que la durée individuelle de chaque impulsion laser soit comprise entre 0,2 et 5 fois, de préférence entre 0,5 et 1,2 fois, la durée de cohérence de l'atmosphère qui est effective dans la zone de focalisation.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un schéma synoptique d'un système LIDAR conforme à l'invention ;
[Fig. 2] montre différents paramètres géométriques d'un faisceau laser tel que produit par le système LIDAR de [Fig. 1] ;
[Fig. 3] est un diagramme temporel qui compare une émission laser possible pour le système LIDAR de [Fig. 1], à des émissions laser de systèmes LIDAR connus de l'art antérieur ;
[Fig. 4] illustre une application possible du système LIDAR de [Fig. 1] ; et
[Fig. 5] illustre un perfectionnement de l'invention, pour effectuer des mesures anémométriques tridimensionnelles.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

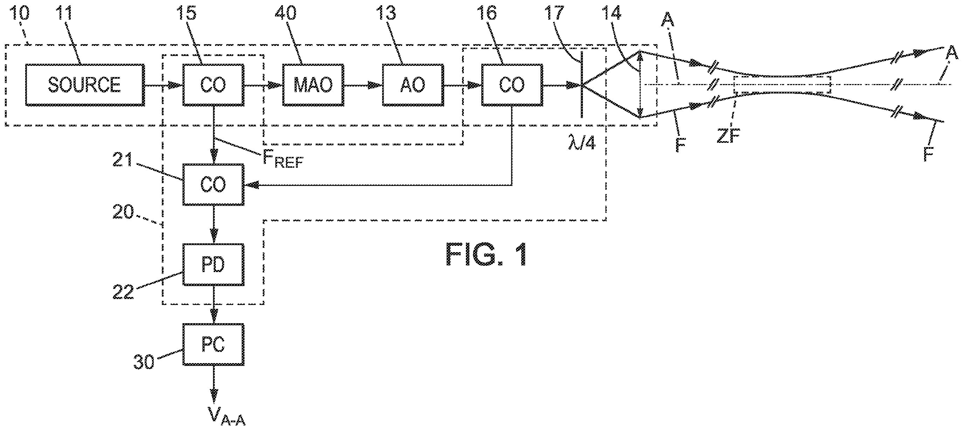

Le système LIDAR conforme à l'invention qui est montré dans [Fig.1] peut être constitué à partir d'un système LIDAR à émission continue. Il comporte une source d'émission laser 10, un ensemble de détection hétérodyne 20 et un module de calcul Doppler 30.

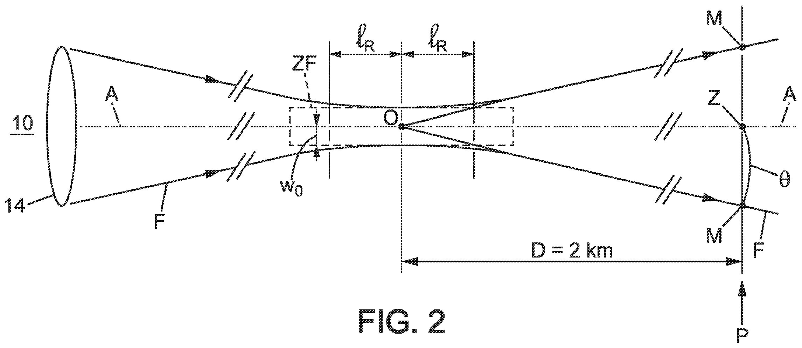

La source d'émission laser 10 peut comprendre une source laser initiale 11, notée SOURCE, un amplificateur optique 13, noté AO, et une optique de sortie 14. La source d'émission laser 10 est ainsi conçue pour produire un faisceau laser F qui possède une structure de faisceau convergent dans une zone d'espace après l'optique de sortie 14. Ainsi le faisceau F, d'axe optique A-A, possède des sections transversales qui diminuent entre l'optique de sortie 14 et une zone de focalisation notée ZF, puis qui augmentent sous forme d'un faisceau divergent au-delà de cette zone de focalisation ZF. De façon connue, la zone de focalisation ZF peut être assimilée à un cylindre d'axe A-A, de rayon w₀ = λ/(π·θ), couramment appelé «waist», et de longueur 2·l_{R}, où l_{R} est la longueur de Rayleigh égale à λ/(π·θ²), θ étant le demi-angle de divergence du faisceau laser F au-delà de la zone de focalisation ZF, exprimé en radian. Typiquement, la distance entre l'optique de sortie 14 et la zone de focalisation ZF peut être de quelques centaines de mètres à plus de 1 km, la longueur de Rayleigh peut être de quelques mètres à 200 mètres et le rayon w₀ de l'ordre du centimètre. La longueur d'onde de la source d'émission laser 10 peut être de l'ordre de 1,55 µm (micromètre), par exemple. De façon générale, le demi-angle de divergence θ du faisceau laser F peut être évalué en aval de la zone de focalisation ZF dans le sens de propagation du faisceau, à une distance D d'un centre O de la zone de focalisation ZF qui est égale à 2 km. Plus précisément, à l'intérieur du plan P de section transversale du faisceau F qui est situé à la distance D du centre O, du côté opposé de l'optique de sortie 14, θ est le demi-angle au sommet du cône de sommet O qui comprend les points M du plan P où l'intensité du rayonnement laser est réduite dans un facteur 1/e² par rapport à sa valeur au point Z d'intersection entre le plan P et l'axe A-A, e étant la base de logarithme népérien. [Fig. 2] montre ces paramètres du faisceau laser F tel que produit par la source 10. L'axe optique A-A constitue la direction centrale de propagation du faisceau F. L'optique de sortie 14 peut notamment être constituée par une lentille convergente, et déterminer la dimension de la pupille de sortie de la source d'émission laser 10. Par exemple, cette pupille de sortie peut avoir un rayon de 0,07 m environ.

L'ensemble de détection hétérodyne 20 peut comprendre un photodétecteur 22, noté PD, des coupleurs optiques 15, 16 et 21, notés CO, et une lame quart d'onde 17, notée λ/4, qui sont disposés pour combiner une partie rétrodiffusée du faisceau laser F avec une partie F_{REF} du faisceau laser tel que produit par la source laser initiale 11. Cette partie F_{REF} du faisceau laser tel que produit par la source laser initiale 11 fait fonction de signal laser de référence, tel que mentionné dans la partie générale de la présente description. De façon connue, la partie rétrodiffusée du faisceau laser F qui est ainsi détectée provient essentiellement de la zone de focalisation ZF, et est produite par des particules rétrodiffusantes qui sont situées dans cette zone.

Enfin, le module de calcul Doppler 30 peut être constitué par une unité informatique notée PC, qui héberge un programme approprié de traitement des signaux délivrés par le photodétecteur 22. Il fournit en sortie une évaluation de la composante de vitesse des particules rétrodiffusantes qui sont dans la zone de focalisation ZF, cette composante étant parallèle à l'axe A-A et notée V_{A-A}.

Le fonctionnement d'un tel système LIDAR est très connu de l'Homme du métier, si bien qu'il n'est pas nécessaire de le répéter ici. De même, l'utilisation de ce système LIDAR pour réaliser des mesures de vitesse anémométrique est aussi connue. Dans ce cas, la source d'émission laser 10 est orientée pour que la zone de focalisation ZF soit dans une portion de l'atmosphère où la vitesse du vent est à caractériser, et les particules qui rétrodiffusent le faisceau laser F sont des poussières, microcristaux ou gouttelettes d'aérosol qui sont en suspension dans l'atmosphère à l'intérieur de la zone de focalisation ZF.

Selon l'invention, un dispositif 40 de contrôle temporel du faisceau laser F est ajouté au système LIDAR qui vient d'être décrit, par exemple au sein de la source d'émission laser 10, entre la source laser initiale 11 et l'amplificateur optique 13, pour découper le faisceau laser F en impulsions laser successives. Par exemple, le dispositif 40 peut être constitué par un modulateur acousto-optique, noté MAO, avec une unité de commande appropriée de celui-ci. Alternativement, le dispositif 40 de contrôle temporel du faisceau laser F peut être à base d'un modulateur électro-optique, d'un amplificateur optique à semi-conducteur tel que couramment désigné par SOA, pour «semiconductor optical amplifier», ou d'un système d'allumage et d'extinction de la source d'émission laser 10. Dans des modes de réalisation alternatifs, le dispositif 40 de contrôle temporel peut être intégré à la source d'émission laser 10. Par exemple, la source d'émission laser 10 peut comprendre une cavité d'amplification laser multimode, dont un mode propre peut être sélectionné par une source d'excitation qui injecte un rayonnement initial dans cette cavité d'amplification laser. Dans un tel cas, la source d'excitation peut elle-même être une source laser impulsionnelle réglable. Le faisceau laser F qui est issu de la cavité d'amplification laser est alors constitué d'impulsions successives, qui correspondent une-à-une aux impulsions de la source d'excitation.

De façon générale dans un système LIDAR conforme à l'invention, les impulsions laser qui sont contrôlées par le dispositif 40 ont une durée individuelle qui est inférieure à 20 µs. Une telle valeur maximale assure qu'une portion d'atmosphère qui serait située sur l'axe A-A en arrière-plan de la zone de focalisation ZF, à grande distance de celle-ci, et qui possèderait un pouvoir de rétrodiffusion important, comme par exemple un nuage, ne produise pas de contribution au signal détecté qui serait superposée à celle de la zone de focalisation ZF.

Dans le cadre de l'invention, la durée d'une impulsion laser est définie par rapport à sa valeur maximale de puissance instantanée, comme étant la durée qui sépare un instant de début d'impulsion où la valeur de puissance instantanée dépasse la moitié de la valeur maximale de puissance instantanée, et un instant de fin d'impulsion où la valeur de puissance instantanée repasse en dessous de la moitié de la valeur maximale de puissance instantanée.

De plus, selon l'invention, les impulsions laser qui sont contrôlées par le dispositif 40 ont une durée individuelle qui est supérieure ou égale au double de la longueur de Rayleigh I_{R} divisée par la vitesse de propagation des impulsions laser dans l'atmosphère. De cette façon, la sélectivité spatiale de la portion d'atmosphère pour laquelle la mesure de vitesse anémométrique est effectuée, est encore déterminée par la zone de focalisation ZF, de la même façon que celle qui a été décrite plus haut pour un système LIDAR à émission continue. Lorsque la longueur de Rayleigh I_{R} est égale à 50 m, la durée individuelle des impulsions laser doit ainsi être supérieure à 0,33 µs. Par exemple, la durée individuelle de chaque impulsion laser peut être égale au triple de la longueur de Rayleigh l_{R} divisée par la vitesse de propagation des impulsions laser dans l'atmosphère, soit 1 µs pour I_{R} = 50 m.

Simultanément, et pour une utilisation optimisée d'un tel système LIDAR dans le but d'effectuer des mesures de vitesse anémométrique, la durée de chaque impulsion peut être sélectionnée en outre pour être comprise entre 0,2 et 5 fois, de préférence entre 0,5 et 1,2 fois, une durée de cohérence de l'atmosphère qui est effective dans la zone de focalisation ZF. Une telle durée de cohérence dépend notamment des déplacements des particules qui produisent la rétrodiffusion du rayonnement laser. Si cette durée de cohérence de l'atmosphère est sensiblement égale à 1 µs, alors la durée individuelle de chaque impulsion laser est sélectionnée de préférence entre 0,2 µs et 5 µs, et de façon encore plus préférée entre 0,5 µs et 1,2 µs.

Un tel fonctionnement d'émission par impulsions peut permettre de mettre en oeuvre des valeurs de puissance instantanée de faisceau laser, à l'intérieur de chaque impulsion à profil rectangulaire, qui sont comprises entre 100 W et 5·10⁵ W, par exemple égale à 500 W. De telles valeurs ne sont pas accessibles pour un rayonnement laser continu, compte tenu des composants d'amplification optique qui sont disponibles ou compatibles avec les applications envisagées.

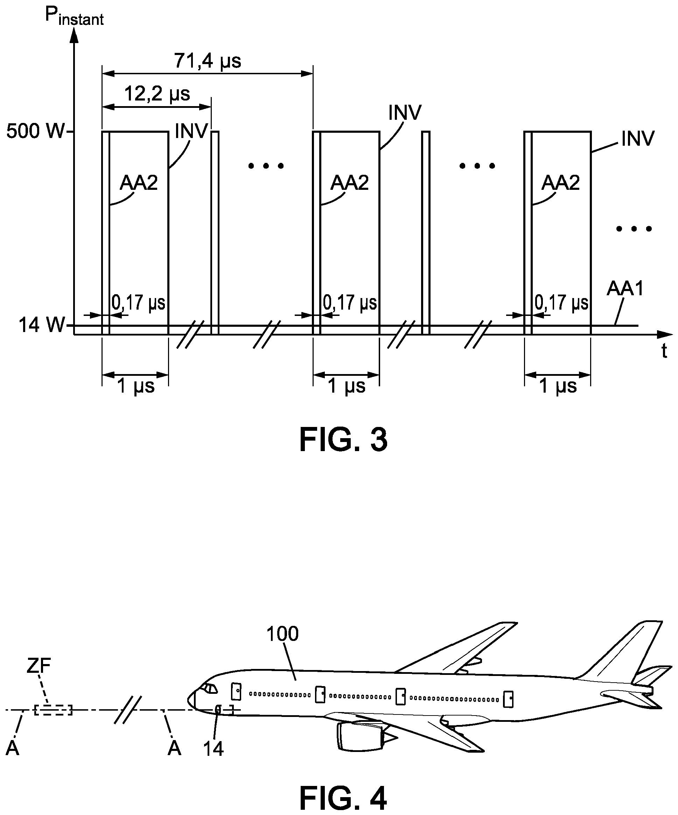

Le diagramme de [Fig. 3] compare l'émission laser à impulsions du système LIDAR pour mesures de vitesse anémométrique qui vient d'être décrit, et qui est conforme à l'invention, à deux autres systèmes connus de l'art antérieur. L'axe horizontal repère le temps, noté t, et l'axe vertical repère les valeurs de puissance instantanée d'émission, notées Pᵢₙₛₜₐₙₜ. Les impulsions notées INV correspondent à une émission laser dans l'atmosphère possible pour le système de l'invention : elle est constituée d'impulsions rectangulaires successives de largeurs individuelles égales à 1 µs, et de puissance instantanée égale à 500 W, avec une nouvelle impulsion toutes les 71,4 µs. Un tel fonctionnement d'émission correspond à une puissance moyenne continue de 7 W environ. La valeur du rapport CNR_sp qui est obtenue avec un tel système LIDAR conforme à l'invention, focalisé à 300 m (mètre) de l'optique de sortie 14, et avec un rayon du faisceau laser F de 5 cm (centimètre) au niveau de cette optique de sortie, est 8,6 pour un coefficient β de rétrodiffusion de l'atmosphère dans la zone de focalisation du faisceau laser F égal à 2·10⁻¹⁰ str⁻¹·m⁻¹ (str pour stéradian). Ces conditions correspondent à une résolution spatiale, égale au double de la longueur de Rayleigh I_{R} d'approximativement 40 m, et la valeur de 8,6 pour le rapport CNR_sp est obtenue par intégration du signal sur 0,1 s (seconde), c'est-à-dire en combinant N=1400 impulsions successives.

Le trait noté AA1 dans [Fig. 3] correspond à un système LIDAR à émission continue, de puissance 14 W. Pour obtenir une valeur de rapport CNR qui soit équivalente à celle du système conforme à l'invention (impulsions INV), les mesures effectuées pour N=1 764 000 fenêtres successives de découpage temporel doivent être combinées, correspondant à une augmentation du rapport CNR_sp qui est proportionnelle à la racine carrée du nombre de mesures N, par rapport à la valeur du rapport CNR_sp relative à chaque mesure individuelle. Alors, si chaque fenêtre de découpage temporel a une durée individuelle de 1 µs, la durée d'un cycle de mesure correspondant à CNR_sp = 8,6 est de 1,764 s. Présenté autrement, à durée égale d'un cycle de mesure, le système de l'invention permet d'augmenter le rapport CNR_sp selon un facteur multiplicatif qui est sensiblement égal à 4,2, en comparaison avec un système LIDAR à émission continue.

Les impulsions notées AA2 dans [Fig. 3] correspondent à un système LIDAR impulsionnel, dont l'émission est constituée d'impulsions rectangulaires successives, de largeurs individuelles égales à 0,17 µs et de puissance instantanée égale à 500 W, avec une nouvelle impulsion toutes les 12,2 µs. Un tel fonctionnement d'émission correspond à une puissance moyenne continue de 7 W et à une résolution spatiale de 40 m, c'est-à-dire des valeurs de puissance moyenne continue et de résolution spatiale qui sont identiques à celle du système LIDAR de l'invention avec les impulsions INV. Le rayon du faisceau laser au niveau de l'optique de sortie, pour le système LIDAR impulsionnel considéré, est 4,1 cm. Pour obtenir la même valeur de rapport CNR_sp que ce système de l'invention, les mesures effectuées séparément pour N=524 800 impulsions AA2 successives doivent être combinées, correspondant encore à une augmentation du rapport CNR_sp qui est proportionnelle à la racine carrée du nombre de mesures N. Alors, la durée d'un cycle de mesure correspondant à CNR_sp = 8,6 pour un tel système LIDAR impulsionnel est de 6,4 s. De plus, le fait d'utiliser des impulsions courtes élargit le spectre mesuré, ce qui provoque une réduction de la précision sur la valeur de vitesse mesurée. Pour maintenir une précision sur la valeur de vitesse qui est équivalente à celle du système LIDAR de l'invention, il faudrait combiner des mesures effectuées séparément pour N=20 500 000 impulsions AA2 successives, correspondant à une durée de mesure de 250 s.

L'invention permet donc de réduire la durée effective d'une mesure par rapport aux systèmes antérieurs, à valeurs égales du rapport CNR_sp.

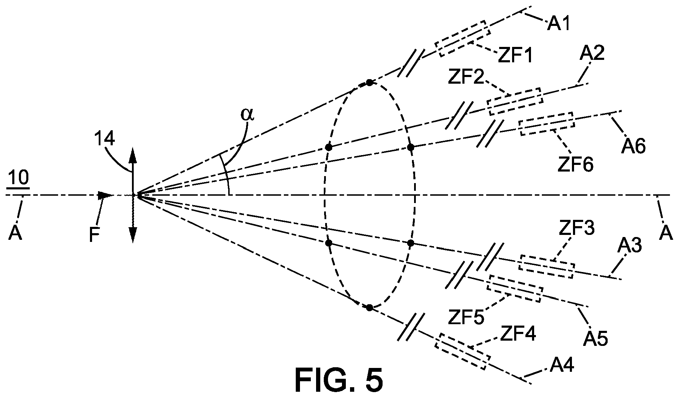

Un système LIDAR qui est conforme à l'invention, et qui est particulièrement adapté pour effectuer des mesures de vitesse anémométrique, peut être utilisé dans de nombreuses applications, parmi lesquelles sans limitation :
- des applications à bord d'un aéronef, pour lesquelles un encombrement et un poids du système LIDAR qui sont réduits constituent des avantages importants. Alors, le système d'émission laser 10, l'ensemble de détection hétérodyne 20 et le dispositif de 40 de contrôle temporel peuvent être tout ou en partie réalisés à base de fibres optiques. [Fig. 4] montre un avion 100 qui est équipé d'un tel système LIDAR pour effectuer des mesures de vitesse anémométrique conformément à l'invention. Le système est de préférence installé à bord de l'avion pour que l'optique de sortie 14 soit située vers le nez de l'avion 100, et tournée en direction du demi-espace qui est en avant de l'avion. [Fig. 4] montre la disposition de la direction centrale de propagation A-A et de la zone de focalisation ZF qui en résulte ;
- des applications pour lesquelles la vitesse anémométrique à mesurer peut être faible, telles que des mesures au niveau du sol ou à faible altitude, par exemple pour optimiser un fonctionnement d'éolienne, ou encore des mesures à partir d'aéronefs qui peuvent être en vol stationnaire. Dans ce cas, le modulateur acousto-optique 40 peut générer en outre un décalage fréquentiel qui est appliqué au faisceau laser F, sans être appliqué à la partie de faisceau laser F_{REF} qui est prélevée de la source initiale 11 par le coupleur optique 15, et qui est utilisée comme signal laser de référence pour la détection hétérodyne. De cette façon, une valeur de vitesse anémométrique qui est faible correspond à une fréquence de battement hétérodyne qui est proche d'une valeur fixée non-nulle, de sorte que la précision de mesure est améliorée sans nécessiter de mettre en oeuvre une durée d'échantillonnage qui soit trop longue ;
- des applications pour lesquelles la distance de mesure, entre l'optique de sortie 14 et la zone de focalisation ZF, doit être variable. Pour cela, l'optique de sortie 14 peut être adaptée pour varier à la demande la convergence du faisceau laser F tel qu'il sort par cette optique. Par exemple, lorsque le faisceau laser F est issu d'une extrémité de fibre optique, l'optique de sortie 14 peut être une lentille convergente montée sur un support qui est mobile en translation parallèlement à l'axe A-A, de façon à déplacer le foyer-objet de la lentille par rapport à l'extrémité de la fibre optique. Ainsi, le point central O de la zone de focalisation ZF peut être situé à une distance de l'optique de sortie 14 qui est contrôlable, par exemple entre 200 m et 1000 m. Notamment, lorsque cette distance est égale à 200 m et le rayon du faisceau laser F au niveau de la pupille de sortie est égal à 0,08 m, la longueur de Rayleigh peut être de l'ordre de 6 m, et lorsque la distance de mesure entre l'optique de sortie 14 et le point central O de la zone de focalisation ZF est égale à 1000 m, la longueur de Rayleigh peut être de l'ordre de 150 m, encore pour 8 cm de rayon pour le faisceau laser F au niveau de la pupille de sortie ;
- des applications pour lesquelles des mesures de trois composantes de la vitesse du vent sont nécessaires. Pour cela, le faisceau laser F peut être divisé en au moins trois sous-faisceaux qui ont des directions centrales de propagation différentes. Les impulsions laser émises selon l'invention à partir du faisceau F sont donc aussi divisées séquentiellement ou simultanément chacune selon au moins trois voies d'émission dirigées vers des zones de focalisation séparées. L'analyse par calcul inverse d'effet Doppler des parties de rayonnement qui sont rétrodiffusées à partir des différentes zones de focalisation fournit une mesure des composantes de vitesse anémométrique qui sont parallèles aux directions centrales de propagation. Alors, en supposant que la vitesse du vent, en tant que grandeur vectorielle, est la même dans toutes les zones de focalisation, il est facile de déduire des évaluations de composantes de la vitesse du vent selon trois axes d'un repère orthogonal. L'Homme du métier sait effectuer un tel calcul de changement d'axes pour des coordonnées d'une vitesse vectorielle. Par exemple, en référence à [Fig. 5], le faisceau laser F d'axe A-A est divisé en six sous-faisceaux laser qui sont répartis angulairement à la surface d'un cône de demi-angle d'ouverture au sommet α, par exemple égal à 15° (degré). Les directions centrales de propagation respectives des six sous-faisceaux laser sont notées A1-A6, et les zones de focalisation correspondantes sont notées ZF1-ZF6. Les directions A1-A6 sont alors les directions de mesure des composantes de la vitesse du vent, et sont réparties autour de la direction centrale que constitue l'axe A-A.

Il est entendu que l'invention peut être reproduite en modifiant des aspects secondaires des modes de réalisation qui ont été décrits en détail ci-dessus, tout en conservant certains au moins des avantages cités. Notamment, des valeurs numériques qui ont été citées ne l'ont été qu'à titre d'illustration, et peuvent être changées en fonction de l'application considérée.

## Revendications

1. Système LIDAR adapté pour effectuer des mesures anémométriques, comprenant :
- une source d'émission laser (10), capable de produire un faisceau laser (F) vers une portion d'atmosphère extérieure au système LIDAR, de sorte que ledit faisceau laser soit convergent au niveau d'une pupille de sortie de la source d'émission laser, et présente une section transversale de faisceau qui est minimale à mi-longueur d'une zone de focalisation (ZF) dudit faisceau laser, ladite zone de focalisation ayant une longueur égale à 2·λ/(π·θ²), mesurée parallèlement à une direction centrale de propagation (A-A) du faisceau laser, où λ est une longueur d'onde du faisceau laser et θ est un demi-angle de divergence dudit faisceau laser au-delà de la zone de focalisation d'un côté opposé à la source d'émission laser, exprimé en radians, λ/(π·θ²) étant appelée longueur de Rayleigh (l_{R}) ;
- un ensemble de détection hétérodyne (20), agencé pour recevoir une partie du faisceau laser (F) qui est rétrodiffusée par des particules contenues dans la zone de focalisation (ZF) ; et
- un module de calcul Doppler (30), adapté pour déduire une valeur de vitesse des particules à partir d'un signal de battement qui est produit par l'ensemble de détection hétérodyne (20),
**caractérisé en ce que** le système LIDAR comprend en outre :
- un dispositif (40) de contrôle temporel du faisceau laser, qui est adapté pour mettre ledit faisceau laser sous forme d'impulsions laser successives, et qui est associé à la source d'émission laser (10) de sorte que les impulsions laser traversent la zone de focalisation (ZF), avec une partie de chaque impulsion laser qui est rétrodiffusée par les particules, le dispositif de contrôle temporel étant adapté en outre pour que chaque impulsion laser ait une durée individuelle qui est supérieure ou égale au double de la longueur de Rayleigh (I_{R}) divisée par une vitesse de propagation des impulsions laser dans l'atmosphère, et inférieure à 20 µs.

2. Système LIDAR selon la revendication 1, dans lequel le dispositif (40) de contrôle temporel est adapté pour que chaque impulsion laser ait une durée individuelle qui est égale au triple de la longueur de Rayleigh (I_{R}) divisée par la vitesse de propagation des impulsions laser dans l'atmosphère.

3. Système LIDAR selon la revendication 1 ou 2, dans lequel le dispositif (40) de contrôle temporel du faisceau laser est adapté pour que la durée individuelle de chaque impulsion laser soit comprise entre 0,2 µs et 5 µs, de préférence entre 0,5 µs et 1,2 µs.

4. Système LIDAR selon l'une quelconque des revendications précédentes, dans lequel le dispositif (40) de contrôle temporel du faisceau laser comprend au moins un composant sélectionné parmi un modulateur acousto-optique, un modulateur électro-optique, un amplificateur optique à semi-conducteur, un système d'allumage et d'extinction de la source d'émission laser, et un système de sélection d'un mode propre d'une cavité d'amplification laser.

5. Système LIDAR selon l'une quelconque des revendications précédentes, adapté en outre pour appliquer un décalage fréquentiel entre chaque impulsion laser et un signal laser de référence qui est utilisé par l'ensemble de détection hétérodyne (20), de sorte qu'une vitesse nulle des particules qui sont contenues dans la zone de focalisation (ZF), par rapport au système LIDAR, corresponde à une fréquence qui est non-nulle pour le signal de battement produit par ledit ensemble de détection hétérodyne.

6. Système LIDAR selon l'une quelconque des revendications précédentes, dans lequel la source d'émission laser (10) est du type à fibre optique, et est adaptée de sorte que chaque impulsion laser ait une puissance moyenne comprise entre 100 W et 5·10⁵ W, de préférence entre 200 W et 2000 W.

7. Système LIDAR selon l'une quelconque des revendications précédentes, dans lequel le dispositif (40) de contrôle temporel du faisceau laser est adapté pour que deux impulsions laser successives soient séparées par une durée qui est comprise entre 3 µs et 500 µs, de préférence inférieure à 100 µs.

8. Système LIDAR selon l'une quelconque des revendications précédentes, agencé pour émettre simultanément des impulsions laser selon plusieurs directions de mesure (A1-A6) qui sont réparties autour d'une direction centrale, avec un angle (α) de chaque direction de mesure par rapport à la direction centrale qui est inférieur à 30°, de façon à obtenir des valeurs respectives de trois coordonnées de la vitesse des particules.

9. Système LIDAR selon l'une quelconque des revendications précédentes, dans lequel la source d'émission laser (10) comprend un dispositif variable de focalisation, adapté pour varier une distance de mesure qui existe entre la pupille de sortie de ladite source d'émission laser et un point central (O) de la zone de focalisation (ZF), par exemple entre 200 m et 1000 m.

10. Aéronef (100), équipé d'un système LIDAR qui est conforme à l'une quelconque des revendications précédentes, ledit système LIDAR étant embarqué à bord de l'aéronef pour effectuer des mesures anémométriques pendant un vol dudit aéronef.

11. Procédé de mesure anémométrique, comprenant les étapes suivantes :
- disposer un système LIDAR qui est conforme à l'une quelconque des revendications 1 à 9, de sorte que la zone de focalisation (ZF) soit contenue dans une portion d'atmosphère où une vitesse anémométrique est à mesurer ;
- adopter une durée individuelle d'impulsion laser qui est supérieure ou égale au double de la longueur de Rayleigh (I_{R}) divisée par la vitesse de propagation des impulsions laser dans l'atmosphère, et inférieure à 20 µs ; et
- activer le système LIDAR pour obtenir une valeur de vitesse des particules qui sont contenues dans la zone de focalisation (ZF).

12. Procédé de mesure anémométrique selon la revendication 11, suivant lequel le dispositif (40) de contrôle temporel du faisceau laser est ajusté pour que la durée individuelle de chaque impulsion laser soit comprise entre 0,2 et 5 fois, de préférence entre 0,5 et 1,2 fois, une durée de cohérence de l'atmosphère qui est effective dans la zone de focalisation (ZF).

## Patentansprüche

1. LIDAR-System, welches dafür ausgebildet ist, anemometrische Messungen durchzuführen, umfassend:
- eine Laseremissionsquelle (10), die in der Lage ist, einen Laserstrahl (F) in Richtung eines Teils der Atmosphäre außerhalb des LIDAR-Systems zu erzeugen, so dass der Laserstrahl an einer Austrittspupille der Laseremissionsquelle konvergiert und einen Strahlquerschnitt aufweist, der auf der halben Länge einer Fokussierungszone (ZF) des Laserstrahls minimal ist, wobei die Fokussierungszone eine Länge gleich 2 · *λ*/(*π* · *θ*²) aufweist, gemessen parallel zu einer zentralen Ausbreitungsrichtung (A-A) des Laserstrahls, wobei λ eine Wellenlänge des Laserstrahls ist und θ ein halber Divergenzwinkel des Laserstrahls jenseits der Fokussierungszone auf einer Seite gegenüber der Laseremissionsquelle ist, ausgedrückt als Radiant, wobei *λ*/(*π* · *θ*²) als Rayleigh-Länge (I_{R}) bezeichnet wird;
- eine Heterodyn-Detektoranordnung (20), die dazu angeordnet ist, einen Teil des Laserstrahls (F) zu empfangen, der von Partikeln zurückgestreut wird, die in der Fokussierungszone (ZF) enthalten sind; und
- ein Doppler-Berechnungsmodul (30), das dazu ausgebildet ist, einen Geschwindigkeitswert der Partikel aus einem Schwebungssignal abzuleiten, das von der Heterodyn-Detektoranordnung (20) erzeugt wird,
**dadurch gekennzeichnet, dass** das LIDAR-System ferner Folgendes umfasst:
- eine Vorrichtung (40) zur zeitlichen Steuerung des Laserstrahls, die dazu ausgebildet ist, den Laserstrahl in aufeinanderfolgende Laserimpulse zu bringen, und die der Laseremissionsquelle (10) derart zugeordnet ist, dass die Laserimpulse durch die Fokussierungszone (ZF) laufen, wobei ein Teil jedes Laserimpulses von den Partikeln zurückgestreut wird, wobei die Zeitsteuerungsvorrichtung ferner dazu ausgebildet ist, dass jeder Laserimpuls eine individuelle Dauer hat, die größer oder gleich dem Doppelten der Rayleigh-Länge (l_{R}), geteilt durch eine Ausbreitungsgeschwindigkeit der Laserimpulse in der Atmosphäre, und kleiner als 20 µs ist.

2. LIDAR-System nach Anspruch 1, wobei die Zeitsteuerungsvorrichtung (40) derart ausgebildet ist, dass jeder Laserimpuls eine individuelle Dauer hat, die gleich dem Dreifachen der Rayleigh-Länge (l_{R}) geteilt durch die Ausbreitungsgeschwindigkeit der Laserimpulse in der Atmosphäre ist.

3. LIDAR-System nach Anspruch 1 oder 2, wobei die Vorrichtung (40) zur zeitlichen Steuerung des Laserstrahls derart ausgebildet ist, dass die individuelle Dauer jedes Laserimpulses zwischen 0,2 µs und 5 µs, vorzugsweise zwischen 0,5 µs und 1,2 µs, liegt.

4. LIDAR-System nach einem der vorhergehenden Ansprüche, wobei die Vorrichtung (40) zur zeitlichen Steuerung des Laserstrahls wenigstens eine Komponente umfasst, die aus einem akusto-optischen Modulator, einem elektro-optischen Modulator, einem optischen Halbleiterverstärker, einem System zum Ein- und Ausschalten der Laseremissionsquelle und einem System zur Auswahl eines Eigenmodus eines Laserverstärkungsresonators ausgewählt ist.

5. LIDAR-System nach einem der vorhergehenden Ansprüche, das ferner dazu ausgebildet ist, eine Frequenzverschiebung zwischen jedem Laserimpuls und einem Referenzlasersignal, das von der Heterodyn-Detektoranordnung (20) verwendet wird, anzuwenden, so dass eine Geschwindigkeit von Null der Partikel, die in der Fokussierungszone (ZF) enthalten sind, in Bezug auf das LIDAR-System einer Frequenz entspricht, die für das von der Heterodyn-Detektoranordnung erzeugte Schwebungssignal nicht Null ist.

6. LIDAR-System nach einem der vorhergehenden Ansprüche, wobei die Laseremissionsquelle (10) vom Lichtwellenleitertyp ist und derart ausgebildet ist, dass jeder Laserimpuls eine durchschnittliche Leistung zwischen 100 W und 5*10⁵ W, vorzugsweise zwischen 200 W und 2000 W, hat.

7. LIDAR-System nach einem der vorhergehenden Ansprüche, wobei die Vorrichtung (40) zur zeitlichen Steuerung des Laserstrahls derart ausgebildet ist, dass zwei aufeinanderfolgende Laserimpulse durch eine Dauer getrennt sind, die zwischen 3 µs und 500 µs, vorzugsweise weniger als 100 µs, liegt.

8. LIDAR-System nach einem der vorhergehenden Ansprüche, das dazu angeordnet ist, gleichzeitig Laserimpulse in mehrere Messrichtungen (A1 -A6) auszusenden, die um eine zentrale Richtung herum verteilt sind, wobei der Winkel (α) jeder Messrichtung in Bezug auf die zentrale Richtung kleiner als 30° ist, um jeweilige Werte von drei Koordinaten der Teilchengeschwindigkeit zu erhalten.

9. LIDAR-System nach einem der vorhergehenden Ansprüche, wobei die Laseremissionsquelle (10) eine variable Fokussierungsvorrichtung umfasst, die dazu ausgebildet ist, eine Messdistanz zu variieren, die zwischen der Austrittspupille der Laseremissionsquelle und einem zentralen Punkt (O) der Fokussierungszone (ZF) besteht, z. B. zwischen 200 m und 1000 m.

10. Luftfahrzeug (100), das mit einem LIDAR-System ausgestattet ist, nach einem der vorhergehenden Ansprüche, wobei das LIDAR-System an Bord des Luftfahrzeugs ist, um während eines Fluges des Luftfahrzeugs anemometrische Messungen durchzuführen.

11. Verfahren zur anemometrischen Messung, welches die folgenden Schritte umfasst:
- Anordnen eines LIDAR-Systems nach einem der Ansprüche 1 bis 9, derart dass die Fokussierungszone (ZF) in einem Teil der Atmosphäre enthalten ist, in dem eine anemometrische Geschwindigkeit zu messen ist,
- Annehmen einer individuellen Laserimpulsdauer, die größer oder gleich dem Doppelten der Rayleigh-Länge (l_{R}) geteilt durch die Ausbreitungsgeschwindigkeit der Laserimpulse in der Atmosphäre und kleiner als 20 µs ist; und
- Aktivieren des LIDAR-Systems, zum Erhalt eines Wertes für die Geschwindigkeit der Partikel, die in der Fokussierungszone (FZ) enthalten sind.

12. Anemometrisches Messverfahren nach Anspruch 11, wobei die Vorrichtung (40) zur zeitlichen Steuerung des Laserstrahls derart eingestellt wird, dass die individuelle Dauer jedes Laserimpulses zwischen dem 0,2- und 5-fachen, vorzugsweise dem 0,5- und 1,2-fachen, einer Kohärenzdauer der Atmosphäre liegt, die in der Fokussierungszone (ZF) wirksam ist.

## Claims

1. A LIDAR system adapted for performing airspeed measurements, comprising:
- a laser emission source (10), capable of producing a laser beam (F) towards a portion of atmosphere outside the LIDAR system, so that said laser beam is convergent at an outlet pupil of the laser emission source, and has a transverse beam section which is minimum at mid-length of a focusing zone (ZF) of said laser beam, wherein said focusing zone has a length equal to 2·λ/(π·θ²), measured parallel to a center propagation direction (A-A) of the laser beam, wherein λ is a wavelength of the laser beam and θ is a divergence half-angle of said laser beam beyond the focusing zone on a side opposite the laser emission source, expressed in radians, where λ/(π·θ²) is called Rayleigh length (l_{R});
- a heterodyne detection assembly (20), arranged for receiving a part of the laser beam (F) which is backscattered by particles contained in the focusing zone (ZF); and
- a Doppler calculation module (30), adapted for deducing a speed value for the particles from a beat signal which is produced by the heterodyne detection assembly (20),
**characterized in that** the LIDAR system further comprises:
- a time-control device (40) for the laser beam, which is adapted for putting said laser beam in successive laser pulse form, and which is combined with the laser emission source (10) so that the laser pulses pass through the focusing zone (ZF), with a portion of each laser pulse backscattered by the particles, wherein the time-control device is furthermore adapted so that each laser pulse has an individual duration which is greater than or equal to twice the Rayleigh length (l_{R}) divided by a propagation speed of the laser pulses in the atmosphere, and less than 20 µs.

2. The LIDAR system according to claim 1, wherein the time-control device (40) is adapted so that each laser pulse has an individual duration which is equal to three times the Rayleigh length (l_{R}) divided by the propagation speed of the laser pulses in the atmosphere.

3. The LIDAR system according to claim 1 or 2, wherein the time-control device (40) for the laser beam is adapted so that the individual duration of each laser pulse is between 0.2 µs and 5 µs, preferably between 0.5 µs and 1.2 µs.

4. The LIDAR system according to any one of the preceding claims, wherein the time-control device (40) for the laser beam comprises at least one component selected among an acoustical-optical modulator, an electro-optical modulator, a semiconductor optical amplifier, a lighting and extinction system for the laser emission source, and an eigenmode selection system for a laser amplification cavity.

5. The LIDAR system according to any one of the preceding claims, furthermore adapted for applying a frequency offset between each laser pulse and a reference laser signal which is used by the heterodyne detection assembly (20), so that a zero speed for the particles which are contained in the focusing zone (ZF) relative to the LIDAR system corresponds to a nonzero frequency for the beat signal produced by said heterodyne detection assembly.

6. The LIDAR system according to any one of the preceding claims, wherein the laser emission source (10) is of optical fiber type, and is adapted so that each laser pulse has an average power between 100 W and 5·10⁵ W, preferably between 200 W and 2000 W.

7. The LIDAR system according to any one of the preceding claims, wherein the time-control device (40) for the laser beam is adapted so that two successive laser pulses are separated by a duration which is between 3 µs and 500 µs, preferably less than 100 µs.

8. The LIDAR system according to any one of the preceding claims, arranged for simultaneously emitting laser pulses along several measurement directions (A1-A6) which are distributed about a center direction, with an angle (α) for each measurement direction relative to the center direction which is less than 30°, so as to get respective values for three coordinates of the velocity of the particles.

9. The LIDAR system according to any one of the preceding claims, wherein the laser emission source (10) comprises a variable focusing device arranged for varying a measurement distance existing between the outlet pupil of said laser emission source and a central point (O) of the focusing zone (ZF), for example between 200 m and 1000 m.

10. An aircraft (100), equipped with a LIDAR system complying with any one of the preceding claims, wherein said LIDAR system is installed on board the aircraft in order to perform airspeed measurements during flight of said aircraft.

11. An airspeed measurement process comprising the following steps:
- arranging a LIDAR system which complies with any one of the preceding claims, so that the focusing zone (ZF) is contained in an atmospheric portion where an airspeed is to be measured;
- adopting an individual laser pulse duration which is greater than or equal to twice the Rayleigh length (l_{R}) divided by the propagation speed of the laser pulses in the atmosphere, and less than 20 µs; and
- activating the LIDAR system to get a speed value for particles which are contained in the focusing zone (ZF).

12. The airspeed measurement process according to claim 11, wherein the time-control device (40) for the laser beam is adjusted so that the individual duration of each laser pulse is between 0.2 and 5 times, preferably between 0.5 and 1.2 times, a coherence time of the atmosphere which is effective in the focusing zone (ZF).
